Europäisches Patentamt

European Patent Office

Office européen des brevets

(19)

(11) **EP 0 653 824 B1**

(12)

# FASCICULE DE BREVET EUROPEEN

(45) Date de publication et mention
de la délivrance du brevet:
**10.10.2001 Bulletin 2001/41**

(51) Int Cl.[7]: **H01S 3/113**, H01S 3/06,
G02F 1/35

(21) Numéro de dépôt: **94402561.8**

(22) Date de dépôt: **14.11.1994**

(54) **Microlaser solide, monolithique, autoaligné, à déclenchement passif par absorbant saturable et son procédé de fabrication**

Selbst justierter, monolithischer Festkörpermikrolaser mit passiver Güteschaltung durch einem sättigbaren Absorber und Verfahren zu seiner Herstellung

Self-aligned monolithic solid state microlaser with passive Q-switch by saturable absorber and method for its manufacture

(84) Etats contractants désignés:
**DE GB IT**

(30) Priorité: **15.11.1993 FR 9313564**

(43) Date de publication de la demande:
**17.05.1995 Bulletin 1995/20**

(73) Titulaire: **COMMISSARIAT A L'ENERGIE ATOMIQUE**
**75015 Paris Cédex 15 (FR)**

(72) Inventeurs:
- **Molva, Engin**
  **F-38000 Grenoble (FR)**
- **Aubert, Jean-Jacques**
  **F-38360 Sassenage (FR)**
- **Marty, Jean**
  **F-38180 Seyssins (FR)**
- **Nunzy, Jean-Michel**
  **F-92160 Antony (FR)**

(74) Mandataire: **Dubois-Chabert, Guy et al**
**BREVATOME**
**3, rue du Docteur Lanceraux**
**75008 Paris (FR)**

(56) Documents cités:
GB-A- 1 566 716        US-A- 3 270 291
US-A- 4 191 931        US-A- 5 119 382

- **OPTICS COMMUNICATIONS., vol.10, no.1, Janvier 1974, AMSTERDAM NL pages 18 - 20 K.H.DREXHAGE ET AL. 'New dye solutions for mode-locking infrared laser'**
- **THE LINCOLN LABORATORY JOURNAL, vol.3, no.3, 1990, LEXINGTON,MA,US pages 427 - 445 J.J.ZAYHOWSKI 'Microchip lasers'**
- **APPLIED PHYSICS LETTERS., vol.59, no.27, 30 Décembre 1991, NEW YORK US pages 3519 - 3520, XP000257103 N.MERMILLIOD ET AL. 'LaMgAl11O19:Nd microchip laser'**
- **OPTICS LETTERS., vol.18, no.18, 15 Septembre 1993, NEW YORK US pages 1514 - 1516, XP000396927 Y.TSOU ET AL. 'Passive Q switching of Nd:YAG lasers by use of bulk semiconductors'**

## Description

La présente invention a pour objet un microlaser solide, une cavité pour ce microlaser et un procédé de fabrication de cette cavité.

L'avantage principal du microlaser (voir refs. 1, 2 données à la fin de la présente description) réside dans sa structure en un empilement de multicouches, qui est sa caractéristique essentielle. Le milieu actif laser est constitué par un matériau de faible épaisseur entre 150-1000 µm et de petites dimensions (quelques mm$^2$), sur lequel des miroirs diélectriques de cavité sont directement déposés. Ce milieu actif peut être pompé par une diode laser III-V qui est soit directement hybridée sur le microlaser, soit couplée à ce dernier par fibre optique. La possibilité d'une fabrication collective utilisant les moyens de la microélectronique autorise une production de masse de ces microlasers à très faible coût.

Les microlasers ont de nombreuses applications, dans des domaines aussi variés que l'industrie automobile, l'environnement, l'instrumentation scientifique, la télémétrie.

Les microlasers connus ont en général une émission continue de quelques dizaines de mW de puissance. Cependant, la plupart des applications citées ci-dessus, nécessitent des puissances crêtes (puissance instantanée) de quelques kW délivrées pendant $10^{-8}$ à $10^{-9}$ secondes, avec une puissance moyenne de quelques dizaines de mW. Dans les lasers solides, on peut obtenir de telles puissances crêtes élevées en les faisant fonctionner en mode pulsé à des fréquences variant entre 10 et $10^4$ Hz. Pour cela, on utilise des procédés bien connus de déclenchement par exemple par Q-switch (ref. 3 donnée à la fin de la présente description).

De façon plus précise, déclencher une cavité laser consiste (ref. 3) à rajouter dans celle-ci des pertes variables dans le temps qui vont empêcher l'effet laser pendant un certain temps, durant lequel l'énergie de pompage est stockée dans le niveau excité du matériau à gain. Ces pertes sont brusquement diminuées, à des moments précis, libérant ainsi l'énergie emmagasinée en un temps très court (pulse géant). On atteint ainsi une puissance crête élevée.

Dans le cas d'un déclenchement dit actif, la valeur des pertes est pilotée de façon externe par l'utilisateur (exemple : miroir de cavité tournant, acousto-optique ou électro-optique intracavité changeant soit le trajet du faisceau, soit son état de polarisation). La durée de stockage, l'instant d'ouverture de la cavité ainsi que le taux de répétition peuvent être choisis indépendamment. En contrepartie, cela nécessite une électronique adaptée et complique considérablement le système laser.

Dans le cas d'un déclenchement dit passif, les pertes variables sont introduites dans la cavité sous forme d'un matériau (appelé Absorbant Saturable - A.S. -) qui est fortement absorbant à la longueur d'onde laser et à faible densité de puissance, et qui devient pratiquement transparent lorsque cette densité dépasse un certain seuil qu'on appelle intensité de saturation de l'A.S.

En particulier, le déclenchement passif en utilisant des absorbants saturables solides (refs. 4, 5 données à la fin de la présente description) ou des polymères absorbants saturables (refs. 7, 8 données à la fin de la présente description) a déjà été réalisé.

Les A.S. connus contiennent souvent des molécules organiques qui sont responsables de l'absorption. Ces matériaux se présentent en général sous forme liquide ou plastique, et ils sont donc souvent de mauvaise qualité optique, vieillissent très vite et ont une mauvaise tenue au flux laser (ref. 3).

Des matériaux solides massifs sont aussi utilisés en tant qu'A.S. Ces matériaux massifs sont obtenus par croissance cristalline et sont dopés avec des ions d'absorbant saturable comme $Cr^{4+}$ (réf. 5) ou $Er^{3+}$ (réf. 6 donnée à la fin de la présente description).

Dans certains cas, le même matériau (par exemple YAG) obtenu par croissance cristalline contient simultanément les ions actifs laser (par exemple Nd) et les ions d'absorbant saturable (par exemple Cr) (réf. 4).

Dans les lasers connus déclenchés passivement à l'aide de ces absorbants saturables, les arrangements suivants ont été proposés pour l'intérieur de la cavité laser.

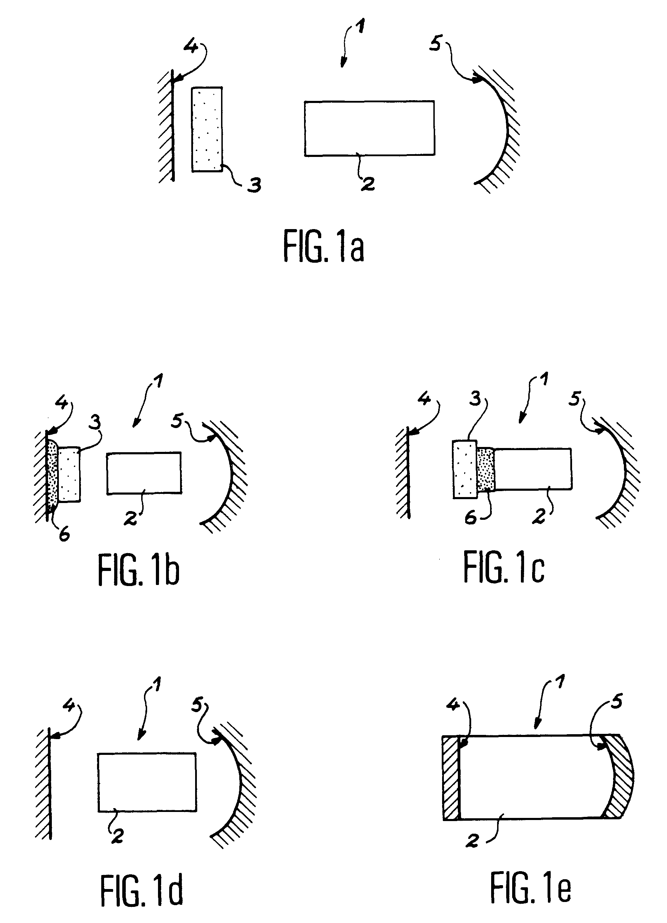

1- Un premier arrangement est illustré sur la figure 1a où 1 représente une cavité laser, 2 le matériau actif laser, 3 l'absorbant saturable et 4, 5 les miroirs d'entrée et de sortie de la cavité (réf. 3).

Il n'y a aucun contact entre l'absorbant saturable 3, d'une part, et les autres éléments de la cavité 1, d'autre part.

Dans ce type de dispositif, il est nécessaire d'aligner optiquement les éléments de la cavité. En outre, des réglages optiques peuvent être nécessaires au cours de l'utilisation du laser.

2- Dans les arrangements schématisés sur les figures 1b et 1c, un contact est assuré entre l'absorbant saturable 3 et un miroir 4 (figure 1b) ou le matériau actif laser 3 (figure 1c) à l'aide d'une colle optique 6 (réf. 7).

Mais la colle introduit un facteur d'absorption résiduelle ainsi que des différences d'indices à l'interface colle-matériaux collés. De plus, un éventuel défaut de parallélisme entre les éléments collés peut être lui-aussi source de pertes dans la cavité laser.

3- Les figures 1d et 1e illustrent une troisième disposition possible (réf. 4). 2 y représente le matériau actif laser, mais celui-ci est codopé avec les ions actifs laser et les ions d'absorbant saturable. Le même milieu sert alors de milieu actif et de milieu absorbant saturable. Il est donc impossible de régler indépendamment les propriétés du matériau laser et de l'absorbant saturable.

Or, l'épaisseur du milieu influe à la fois sur l'absorption de l'absorbant saturable et sur l'absorption des ions actifs laser, ainsi que sur la structure de modes du laser.

D'autre part, les coefficients d'absorption des ions actifs laser et absorbants saturables sont directement liés aux concentrations de ces ions, qui sont fixées définitivement lors de la croissance des cristaux et ne peuvent être modifiées par la suite. Pour chaque configuration laser, il faut donc refaire un nouveau cristal.

Enfin, dans le cas des lasers à déclenchement passif où le même ion (par exemple Er) est utilisé à la fois pour l'action laser et comme absorbant saturable, il est impossible d'utiliser cette méthode de codopage. En effet, le même ion pourra servir comme ion actif ou comme ion absorbant saturable à condition que les concentrations soient très différentes. Pour l'absorbant saturable, la concentration doit être beaucoup plus élevée que pour le matériau actif laser. Le document US-A-3270291 décrit une cavité laser selon le préambule de la revendication 1.

L'invention a justement pour objet un nouveau type de cavité laser à milieu actif solide pour microlaser, permettant de résoudre les différents problèmes mentionnés ci-dessus. L'invention concerne aussi un procédé de fabrication de cette cavité microlaser, ainsi qu'un microlaser incorporant cette dernière.

Pour remédier aux problèmes ci-dessus, l'invention selon la revendication 1 propose de déposer l'absorbant saturable sous la forme d'une couche mince, directement sur le matériau actif du microlaser, cette couche étant constituée d'un gel de silice contenant un colorant organique, ou étant un polymère contenant des molécules d'absorbant saturable et formé à partir d'une solution.

De façon plus précise, l'invention selon la revendication 1 a pour objet une cavité pour microlaser comportant un milieu actif solide, un absorbant saturable, un miroir d'entrée et un miroir de sortie, caractérisée en ce que l'absorbant saturable est une couche mince de matériau absorbant saturable, directement déposée sur ledit milieu actif solide, cette couche étant constituée d'un gel de silice contenant un colorant organique, ou étant constituée d'un polymère contenant des molécules d'absorbant saturable et formé à partir d'une solution.

Un des avantages principaux de l'invention est dans la structure du microlaser (ou du microsystème laser consistant en un microlaser associé à de la micro-optique) déclenché, qui consiste en un empilement de couches, permettant de garder la possibilité d'une fabrication collective à bas coût. Cette structure multicouches ne remet pas en cause la simplicité et les procédés de fabrication collective, donc à faible coûts, des microlasers, tels qu'ils ont été développés pour les microlasers continus. Elle permet de réaliser des microlasers déclenchés passivement, monolithiques, autoalignés (sans aucun réglage optique) et indéréglables. Cette structure ne nécessite aucune opération de collage ni aucune opération complexe d'alignement.

Un autre avantage du microlaser par rapport au laser "codopé" est qu'on sépare le milieu actif de l'absorbant saturable, mais qu'on évite le collage des deux milieux tout en gardant une structure monolithique. Ainsi, on peut :

- d'une part régler indépendamment les épaisseurs (pendant le dépôt des couches ou par amincissement mécanique après le dépôt des couches) et les concentrations des ions dans les deux milieux,
- d'autre part, grâce à cette séparation, réaliser des lasers déclenchés où le même ion (par exemple Er) peut être utilisé comme ion actif et comme absorbant saturable, avec des concentrations différentes.

Le matériau laser de base pourra être choisi parmi des matériaux du type :

- $Y_3Al_5O_{12}$ (ou "YAG"),
- $LaMgAl_{11}O_{19}$ (ou "LMA"),
- $Y_2SiO_5$ (ou "YSO"),
- $GdVO_4$,
- $YVO_4$,
- $YLiF_4$ (ou "YLF"), ou d'autres matériaux connus le dopage étant assuré par des ions de néodyme (Nd), d'erbium (Er), d'ytterbium (Yb), de thulium (Tm), d'holmium (Ho), ou par un codopage Er+Yb (erbium + ytterbium) ou Tm+Ho (thulium + holmium), ou par d'autres ions connus.

Selon un mode préféré de réalisation de l'invention, la couche mince est composée d'un colorant organique en solution dans un solvant polymère.

De façon plus précise, le colorant organique est choisi parmi le bis(4-diéthylaminodithiobenzyl) nickel ou le bis (4-diméthylaminodithiobenzyl)nickel et que le solvant est une solution de poly(méthyméthacrylate) (PMMA), de poly(vinylalcool) ou de poly(vinyl acétate) ou de poly(styrène).

Un avantage du dépôt de polymère est qu'on peut le déposer sur n'importe quel matériau laser.

D'autre part, la différence d'indice entre le matériau laser et le polymère introduit une interface optique entre les deux milieux.

On évite tout collage entre le matériau actif et la couche d'absorbant saturable. On ne sera donc pas confronté aux problèmes liés à une absorption résiduelle, à des différences d'indices ou à d'éventuels défauts de parallélisme.

En couche mince (polymère) l'épaisseur des couches d'absorbant saturable peut être beaucoup plus faible que dans le cas des absorbants saturables massifs. En effet, quelques microns (1-10 μm) de polymère suffisent à obtenir un coefficient d'absorption correct pour le fonctionnement du laser. Ainsi, grâce à cette faible épaisseur, l'encombrement du microlaser monolithique est faible.

Selon une autre possibilité de l'invention, la cavité microlaser telle que définie précédemment comporte une deuxième couche d'absorbant saturable.

Afin de réaliser une cavité laser complète, on pourra prévoir :

- sur la face d'entrée, un miroir dichroïque réalisé par un dépôt de multicouches diélectriques,
- sur la face de sortie, par-dessus la couche d'A.S., un miroir de sortie, réalisé de la même manière.

En outre, on pourra également prévoir un réseau de microlentilles, directement gravées sur le matériau laser, sous le dépôt de multicouches diélectriques formant le miroir d'entrée.

L'invention a aussi pour objet un microlaser comportant une cavité telle que définie précédemment et des moyens de pompage optique du milieu actif solide.

De façon avantageuse, les moyens de pompage consisteront en au moins une diode laser.

L'ensemble des éléments constituant ainsi le microlaser pourra être intégré dans un boîtier de montage ou support mécanique. De façon alternative, on pourra prévoir un premier boîtier contenant la cavité microlaser, un second boîtier contenant les moyens de pompage optique et une connexion optique du type fibre optique entre les deux boîtiers.

L'invention a aussi pour objet un procédé de fabrication de microcavités laser telles que définies précédemment. Ce procédé comporte les étapes suivantes :

- une étape de conditionnement, à une épaisseur prédéterminée, du matériau constitutif du milieu actif solide,
- une étape de formation d'une couche mince d'absorbant saturable, directement sur une des faces ou sur les deux faces du matériau préparé selon l'étape précédente, cette couche étant constituée d'un gel de silice contenant un colorant organique, ou étant constituée d'un polymère contenant des molécules d'absorbant saturable et formé à partir d'une solution.

Selon un premier mode préféré de réalisation du procédé ci-dessus, la couche mince sera déposée à la tournette.

Elle sera constituée, préférentiellement, d'un colorant organique en solution dans un solvant polymère.

Le colorant organique sera choisi parmi le bis (4-diéthylaminodithiobenzyl)nickel ou le bis (4-diméthylaminodithiobenzyl) nickel et le solvant sera une solution de poly(méthyméthacrylate (PMMA), de poly(vinylalcool) ou de poly(vinyl acétate) ou de poly(styrène)

Ce procédé de réalisation ne comporte que des étapes de mise en oeuvre simple et offre la possibilité de fabriquer des microcavités laser en grande série, donc à faible coût.

Là encore, aucune étape d'alignement optique des éléments de la cavité n'est nécessaire.

De façon avantageuse, on pourra ajouter au procédé précédent une étape supplémentaire de formation d'un réseau de microlentilles, directement à la surface du matériau laser.

En particulier, les microlentilles pourront être gravées directement sur le matériau laser. Enfin, on pourra prévoir, en outre, une étape de formation d'un miroir d'entrée et d'un miroir de sortie de la cavité par dépôt de multicouches diélectriques.

Ces deux étapes supplémentaires n'enlèvent rien à la simplicité de mise en oeuvre du procédé ni à son économie.

D'autres caractéristiques et avantages de l'invention ressortiront mieux de la description qui va suivre, donnée à titre purement illustratif et non limitatif, en référence aux figures annexées dans lesquelles :

- les figures 1a à 1e, déjà décrites, représentent schématiquement divers dispositions possibles d'une microcavité laser, selon l'art antérieur,
- les figures 2a et 2b représentent une cavité microlaser selon l'invention, en mode plan-plan (figure 2a) ou plan concave (figure 2b), avec une couche d'absorbant saturable,
- les figures 3a et 3b illustrent la répartition des modes dans une cavité Fabry-Pérot plan-plan d'épaisseur e,
- les figures 4a et 4b représentent une cavité microlaser selon l'invention, en mode plan-plan (figure 4a) ou plan concave (figure 4b), avec deux couches d'absorbant saturable,
- les figures 5a et 5b représentent un réseau de microlentilles sur le matériau actif laser, déposé directement par gravure sur ce matériau (figure 5a) ou déposé d'abord sur un autre matériau et ensuite hybridé sur une face polie du matériau laser (figure 5b),
- les figures 6a et 6b représentent un microlaser selon l'invention, avec ses moyens de pompage optique et le (figure 6a) ou les (figure 6b) boîtiers de support des différents éléments.
- la figure 7 représente une étape du procédé de fabrication de microcavités laser selon l'invention,
- la figure 8 représente l'étape de découpage des puces microlaser dans une lame constituée d'un empilement de couches de matériau laser (éventuellement avec microlentilles), d'absorbant saturable et de miroirs,

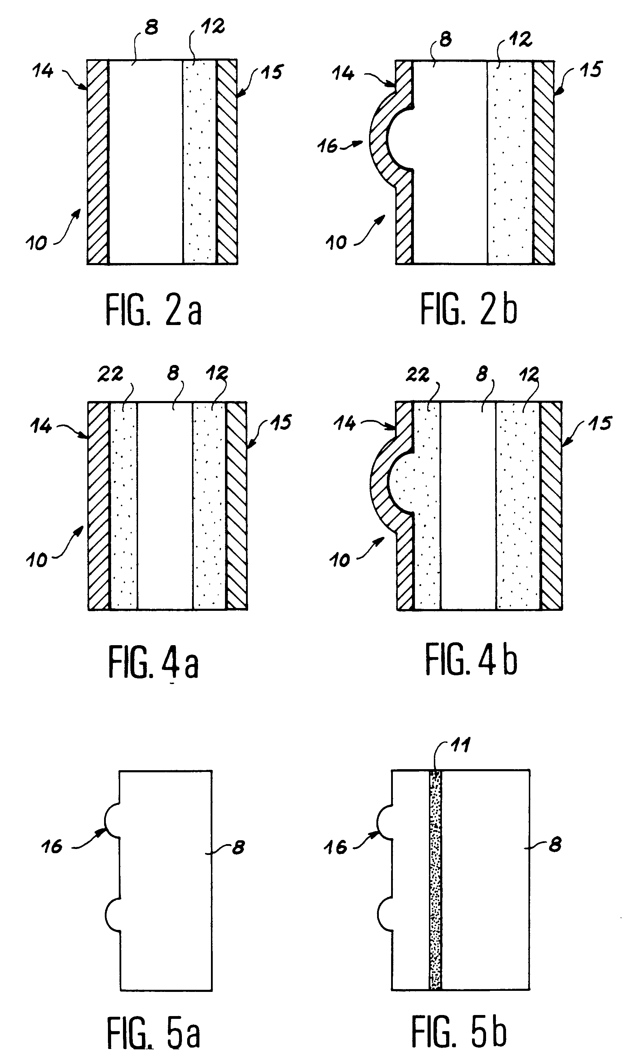

L'invention se rapporte à une cavité microlaser comportant un milieu actif solide, ainsi qu'un absorbant saturable directement déposé, sous la forme d'une couche mince, sur le milieu actif solide. Un mode préféré de réalisation d'une telle structure est représentée sur la figure 2a où le milieu actif 8 et la couche d'absorbant saturable 12 sont compris entre deux miroirs 14 et 15 qui ferment la cavité laser. La référence 10 désigné l'ensemble de la cavité.

De façon classique, le matériau constitutif du milieu actif 8 sera dopé au néodyme (Nd) pour une émission laser autour de 1,06 $\mu$m. Ce matériau pourra être choisi, par exemple, parmi l'un des matériaux suivants : YAG ($Y_3Al_5O_{12}$), LMA ($LaMgAl_{11}O_{19}$), $YVO_4$, YSO ($Y_2SiO_5$), YLF ($YLiF_4$) ou $GdVO_4$, etc. Ce choix sera conditionné par les critères suivants, mais dépendra également des applications :

- ainsi qu'on le verra plus loin, la cavité laser 1 sera pompée optiquement, de préférence avec une ou plusieurs diodes lasers. Un premier critère est donc un fort coefficient d'absorption à la longueur d'onde de la pompe (par exemple, diode laser III-V émettant autour de 800 nm) pour augmenter l'efficacité de pompage, tout en gardant une épaisseur de matériau faible (<1mm).
- une large bande d'absorption à la longueur d'onde de la pompe vers 800 nm pour répondre au problème de la stabilisation en longueur d'onde de la diode laser, et simplifier ainsi le choix et la commande électrique de la diode laser de pompe,
- une forte section efficace d'émission stimulée, pour obtenir des puissances de sortie élevées et de forts rendements,
- une faible largeur de la bande d'émission pour obtenir aisément un laser monofréquence. Ou bien au contraire, une large bande d'émission, pour réaliser une émission laser accordable en fréquence,
- de bonnes propriétés thermomécaniques, pour simplifier l'usinage du matériau et pour limiter les effets thermiques néfastes par une bonne évacuation de la chaleur produite par l'absorption de la pompe (cette chaleur en excès dépendra du rendement énergétique du laser),
- une durée de vie longue dans l'état excité pour un stockage d'énergie important. Ou bien durée de vie courte pour une cadence de déclenchement rapide,
- de grandes dimensions pour pouvoir fabriquer simultanément en fabrication collective, le plus grand nombre de microlasers avec un cristal laser.

En général, aucun des matériaux connus ne répond en même temps à tous ces critères. Cependant, parmi les matériaux connus, ceux qui sont les plus adaptés au fonctionnement du microlaser sont (avec des durées de vie comparables de quelques centaines de microsecondes) :

- $YVO_4$, qui présente un bon coefficient et une large bande d'absorption ainsi qu'une bonne section efficace. Mais il possède une mauvaise conductivité thermique, on ne l'obtient que sous de faibles dimensions et il est fragile,
- YAG, dont le coefficient d'absorption et la section efficace d'émission stimulée sont moyens et dont les largeurs de bandes d'absorption et d'émission sont faibles. Il se présente sous de grandes dimensions et a une bonne conductivité thermique. Dopé au néodyme (Nd), c'est le matériau laser solide le plus connu et le plus utilisé actuellement,

- LMA : ce matériau offre un coefficient d'absorption et une section efficace faibles. Les bandes d'absorption et d'émission sont larges. Il est de grande dimension mais sa conductivité thermique est mauvaise.

Pour des émissions à d'autres longueurs d'ondes on choisira des matériaux et des dopants différents. En général, les ions actifs sont choisis parmi :

- Nd pour une émission autour de 1,06 $\mu$m,
- Er ou un codopage erbium-ytterbium Er+Yb pour une émission autour de 1,5 $\mu$m,
- Tm ou Ho ou un codopage de thulium et d'holmium pour une émission autour de 2 $\mu$m.

Un autre paramètre décisif est l'épaisseur $\underline{e}$ du milieu actif 2. On pourra se reporter, pour plus de détails, aux figures 3a et 3b qui représentent d'une part un milieu amplificateur laser 2 de largeur $\underline{e}$, et, d'autre part, un diagramme de la répartition spectrale des modes Fabry-Pérot du milieu amplificateur. Sur ce diagramme, l'enveloppe des modes représente la bande de gain, dg représente la largeur de la bande de gain et dv l'espacement des modes. Sur l'axe vertical, est portée l'intensité en unité arbitraire. L'axe horizontal est une échelle de fréquences.

L'épaisseur $\underline{e}$ conditionne les caractéristiques du microlaser :

- d'une part, l'absorption du faisceau pompe sera d'autant plus forte que l'épaisseur e sera grande ; en effet, si Io est l'intensité de la pompe incidente sur la face d'entrée, et "a" le coefficient d'absorption, l'intensité absorbée sur l'épaisseur $\underline{e}$ sera donnée par :

$$I \text{ absorbée} = Io(1-e^{-ae}),$$

- d'autre part, le nombre de modes longitudinaux d'une cavité Fabry-Pérot augmente avec l'épaisseur et, si on veut réaliser un laser monomode longitudinal, cette épaisseur doit être faible. En effet, dans une cavité Fabry-Pérot plan-plan d'épaisseur e, l'intervalle spectral libre dv entre deux modes Fabry-Pérot est donné par :

$$dv=c/2e$$

avec c : vitesse de la lumière.

Si dg est la largeur de la bande de gain (d'émission laser) du matériau, le nombre de modes N sera donné par :

$$N = dg/dv$$

On voit que, pour un matériau donné (a et dg donné), quand e augmente, l'absorption de la pompe augmente mais N augmente également. Pour un laser monofréquence, on choisit en général l'épaisseur minimum pour N=1, à condition que cette épaisseur soit >100 μm. Les épaisseurs typiques pour obtenir un seul mode sont :

- YAG L = 750 μm,
- YVO$_4$ L = 500 μm,
- LMA L = 150 μm.

En pratique l'épaisseur e variera donc entre 100 μm et 5 mm.

L'absorbant saturable 12 (figures 2a et 2b) se présente sous la forme d'une couche mince constituée d'un polymère contenant les molécules d'absorbant saturable. Typiquement pour un microlaser à 1,06 μm, on pourra utiliser, en tant qu'absorbant saturable, un colorant organique comme le bis(4-diéthylaminodithiobenzyl)nickel (BDN, Kodak, CAS N°51449-18-4) dans une solution contenant, en masse, 6% de poly (méthylméthacrylate) (PMMA) dans du chlorobenzène.

D'autres polymères tels que le poly(vinyl alcool) ou le poly(vinyl acétate) ou encore le poly(styrène) peuvent être employés (dans leurs solvants respectifs) à la place du PMMA. On peut aussi utiliser le bis(4-diméthylaminodithiobenzyl)nickel (BDN, Kodak, CAS N° 38465-55-3) comme colorant.

Le colorant peut aussi être incorporé dans un gel de silice ou bien greffé à même la chaîne de polymère.

De nombreux autres complexes métalliques et dithienes peuvent servir de colorant (refs. 8, 9 données à la fin de la présente description).

La technique peut aussi être employée pour le déclenchement de lasers fonctionnant à d'autres longueurs d'ondes que 1,06 μm; On déclenchera par exemple des lasers dopés avec de l'erbium ou avec un complexe Er$^+$Yb émettant autour de 1,5 μm avec du tétraéthyl-octahydrotétraazapentaphène-dithiolatonickel (ref. 9).

Ce type de solution sera déposé à la tournette, directement sur le matériau laser (voir plus loin pour le procédé de préparation). On réalise ainsi des couches minces ayant une épaisseur de l'ordre de 1 à 5 μm.

La différence d'indice entre le matériau laser 8 et le polymère 12 introduit une interface optique entre les deux milieux.

Enfin, la nature de la couche mince influe sur la forme temporelle de l'impulsion laser. Dans le cas du colorant organique en solution dans un polymère, le temps de déclin du colorant est très court (~1ns).

Ces propriétés conditionneront évidemment le choix de la couche mince en fonction de l'utilisation prévue.

Selon un autre mode de réalisation de l'invention, et comme illustré sur la figure 4a, il est possible de déposer une couche d'absorbant saturable 12, 22 de chaque côté du matériau laser actif 8. Ceci permet d'absorber plus d'énergie du faisceau pompe, mais la couche mince située du côté de l'entrée du faisceau pompe subira une usure plus importante du fait, précisément, du faisceau pompe. Les références 14 et 15 représentent les miroirs d'entrée et de sortie de la cavité.

De façon optionnelle et comme illustré sur la figure 5a, il est possible de fabriquer par une méthode connue selon l'art antérieur (ref. 10 donnée à la fin de la présente description) un réseau de microlentilles 16 en un matériau transparent (silice, ...) sur la surface du matériau laser 8. Les dimensions typiques de ces microlentilles sont :

- diamètre de cent à quelques centaines de microns,
- rayons de courbure de quelques centaines de micromètres à quelques millimètres.

Ces microlentilles servent à réaliser des cavités "stables" (la cavité "plan-plan" n'est pas stable) du type plan-concave Comme illustré sur la figure 2b ou sur la figure 4b dans le cas de la présence, sur la face d'entrée, d'une deuxième couche 22 d'absorbant saturable. Elles permettent également dans le cas d'un pompage optique, de focaliser le faisceau pompe.

Pour réaliser une cavité laser complète, le milieu actif avec sa (ou ses) couche(s) d'absorbant saturable sera compris entre deux miroirs 14, 15. Le miroir d'entrée, déposé par des procédés connus, sera de préférence un miroir de type dichroïque présentant une réflectivité maximum (la plus proche possible de 100%) à la longueur d'onde du laser et une transmission la plus élevée possible (>80%) à la longueur d'onde de la pompe (en général vers 800 nm pour les matériaux dopés Nd, vers 980 nm pour ceux dopés Er, et vers 780 nm pour ceux dopés Tm). Le miroir de sortie est également de type dichroïque mais laisse passer quelques pour cent du faisceau laser.

On obtient donc une cavité laser présentant une des structures représentées sur les figures 2a, 2b et 4a, 4b.

On voit immédiatement l'avantage d'une telle structure puisqu'elle ne nécessite, à aucun moment, d'alignement optique des différents composants, et qu'elle n'introduit aucune colle optique, tout en évitant les problèmes liés à une structure où le milieu actif est codopé avec les ions actifs lasers et les ions d'absorbant saturable.

Le pompage de ce type de cavité sera préférentiellement un pompage optique. Ainsi, les diodes laser III-V sont particulièrement bien adaptées pour pomper une cavité microlaser.

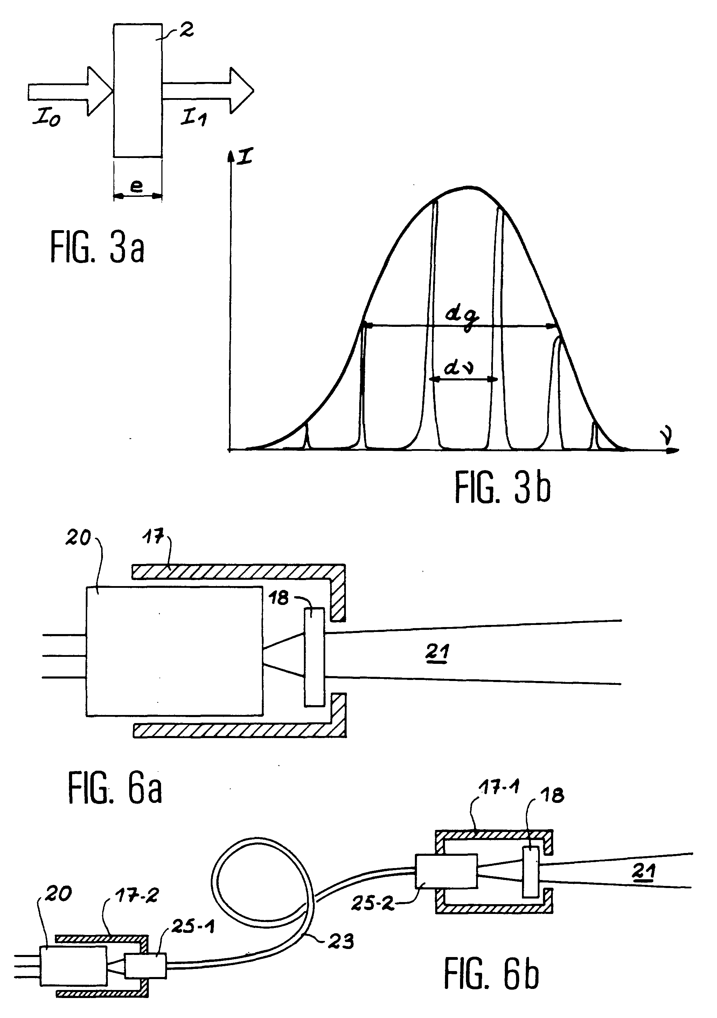

Comme illustré sur la figure 6a, la cavité microlaser 18 peut être montée dans un boîtier mécanique 17 qui sera prévu pour recevoir la diode laser de pompe 20. La référence 21 y représente le faisceau laser pulsé. On peut également, selon un mode de réalisation illustré sur la figure 6b, prévoir deux boîtiers séparés 17-1 et 17-2 : l'un pour recevoir la cavité microlaser 18, l'autre pour recevoir la diode laser de pompe 20, les deux boîtiers étant reliés par une fibre optique 23, à l'aide d'un connecteur prévu dans chaque boîtier (25-1, 25-2).

L'invention concerne également un procédé de fabrication d'une cavité microlaser telle que décrite précédemment.

On peut distinguer, dans ce procédé, sept étapes successives :

1) - La première étape consiste à choisir le matériau actif laser. On a déjà présenté, ci-dessus, les différents matériaux possibles ($YVO_4$, YAG, LMA, etc.) ainsi que les différents critères qui permettront à l'homme du métier de choisir entre ces différents matériaux.

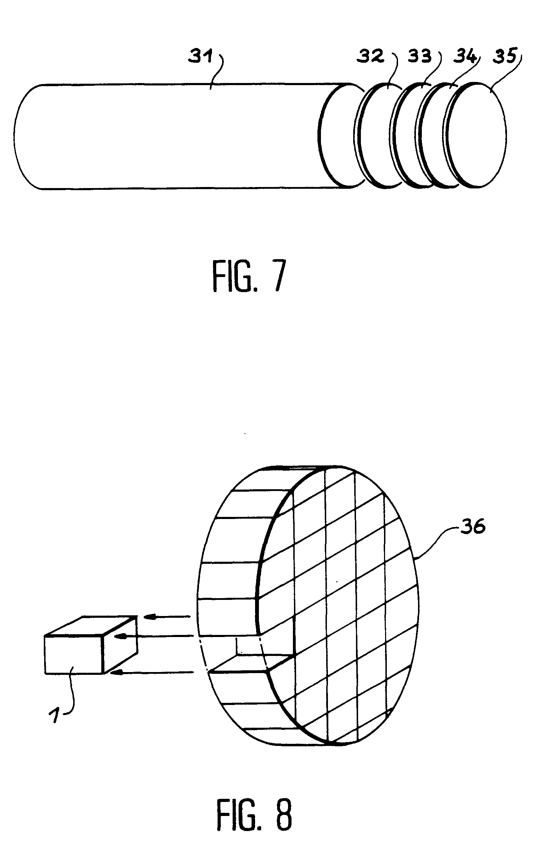

2) - La deuxième étape (voir figure 7) sera une étape de conditionnement du cristal laser 31 choisi : on l'oriente et on le découpe en lames d'épaisseur comprise entre 0,5 et 5 mm (32, 33, 34, 35).

3) - La troisième étape est une étape de rodage et de polissage des lames, et a deux objectifs :

- d'une part, enlever la couche d'écrouissage superficielle due à la découpe,
- d'autre part, ramener l'épaisseur des lames à une épaisseur légèrement supérieure à la spécification du microlaser. En effet, ainsi qu'il a été détaillé ci-dessus, l'épaisseur du milieu actif est un paramètre important qui conditionne les caractéristiques du microlaser.

Les lames rodées et rapprochées de l'épaisseur finale sont polies sur les deux faces avec une qualité optique.

La découpe, le rodage et le polissage sont faits avec des procédés connus, en utilisant des machines connues de l'homme du métier.

4) - Une étape de préparation et de dépôt d'une couche mince d'absorbant saturable, sous la forme d'un colorant organique absorbant saturable, en solution dans un polymère, ou sous la forme d'un gel de silice contenant un colorant organique.

Typiquement, pour un microlaser fonctionnant à 1,06 $\mu$m, on peut utiliser, comme absorbant saturable un colorant organique comme le bis(4-diéthylaminodithiobenzyl)nickel (BDN, Kodak, CAS N° 51449-18-4) dans une solution de poly (méthylméthacrylate) (PMMA).

Pour cela, on prépare une solution contenant en masse 6% de poly(méthylméthacrylate) (PMMA, masses moyennes Polyscience) dans du chlorobenzène (Prolabo) en agitant 24 heures. On y rajoute 0,2% en masse de BDN et on agite encore 2 heures. La solution est ensuite filtrée et déposée sur le substrat, sur la face de sortie (opposée à la face d'entrée qui comporte le miroir dichroïque) au goutte à goutte avec un mouvement circulaire centrifuge. On peut utiliser pour ce dépôt à la "tournette" une machine standard telle que celle utilisée en microélectronique pour le dépôt des résines servant aux opérations de lithogravure. Le substrat est préalablement nettoyé dE toutes les traces d'impuretés résultant du polissage. Il est mis en rotation (tournette) pendant 20 secondes à 2000 tours/minute, puis pendant 30 secondes à 5000 tours/minute. La couche est enfin mise à sécher 2 heures dans un four à 70°C.

On obtient ainsi un film de 1 $\mu$m d'épaisseur contenant 3% de molécules actives (BDN) et dont la densité optique est de 0,13 à 1,06 $\mu$m (74% de transmission) avant saturation. Un tel absorbant saturable a un temps de relaxation voisin de 10 ns et sature à une intensité voisine de 1 $MW/cm^2$.

En variant les paramètres de concentration du polymère, sa masse moléculaire ou son solvant, la proportion de colorant ainsi que la vitesse de rotation de la tournette, on peut ajuster les performances de l'absorbant saturable. Les spécifications obtenues typiquement sont :

- épaisseur du film : 1 à 5 $\mu$m,
- densité de molécules : 5 à 10% en masse,
- colorant : BDN, mm=685g,
- transition vitreuse : Tg=78°C,
- absorption à 1,06 $\mu$m : 10 à 70%,
- taux de saturation : 90%,
- section efficace : $10^{-16} cm^2$,
- temps de relaxation : 2 à 15 ns,
- intensité de saturation : 0,1 à 1 $MW/cm^2$,
- non-uniformité du film : <5% sur $1 cm^2$,
- taux de dépolarisation : $<10^{-5}$,
- pertes à 800 nm : <1%,
- fréquence de récurrence : 10-10000 Hz,
- photostabilité : $10^8$ coups,
- technique de dépôt : tournette.

D'autres polymères tels que le poly(vinylalcool) ou le poly(vinylacétate) ou encore poly(styrène) peuvent être employés dans leurs solvants respectifs) à la place du PMMA. On peut aussi utiliser le bis(4-diméthylaminodithiobenzyl)nickel (BDN, Kodak, CAS N° 38465-55-3) comme colorant.

Le colorant peut aussi être incorporé dans un gel de silice ou bien greffé à même la chaîne de polymère.

De nombreux autres complexes métalliques de dithiene peuvent servir de colorant (refs. 8, 9) pour d'autres longueurs d'onde.

La technique peut aussi être employée pour le déclenchement de lasers fonctionnant à d'autres longueurs d'ondes que 1,06 μm. On déclenchera par exemple des lasers à Er ou Er+Yb (matériaux dopé Er ou Er+Yb où l'ion actif est Er) émettant autour de 1,5 μm avec du tétraéthyloctahydrotétraazapentaphènedithiolato-nickel (ref. 9).

5) - Une étape de dépôt du miroir d'entrée. Il s'agit d'un miroir dichroïque, obtenu par un dépôt de multicouches diélectriques, procédé connu lui aussi de l'homme du métier et commercialement disponible.

L'étape 5 (dépôt du miroir d'entrée) peut être réalisée avant ou après l'étape 4.

6) - Une étape de dépôt du miroir de sortie sur la couche mince.

On utilisera les mêmes techniques que celles mises en jeu dans l'étape 5).

7) - Une étape de découpe des lames pour obtenir des puces microlasers (voir figure 8).

Les plaquettes 36 comportant les miroirs, l'absorbant saturable et le milieu actif laser et éventuellement les microlentilles sont découpées par une scie diamantée (de type celle qui sont utilisées en microélectronique pour la découpe des puces Si), pour obtenir les puces laser 1 de quelques mm$^2$ de section (figure 8, les traits sur la plaquette 36 représentent les lignes de découpe).

On peut prévoir une étape supplémentaire, avant l'étape 4), au cas où l'on souhaite fabriquer sur l'une ou l'autre face de la lame polie obtenue par l'étape 3) un réseau de microlentilles.

Un mode de réalisation préféré de cette étape supplémentaire consiste à graver directement les microlentilles sur le matériau laser, en utilisant des technologies utilisées couramment en microélectronique (figure 5a).

Un autre mode de réalisation de cette étape consiste à réaliser d'abord ces microlentilles sur un autre matériau (résine photosensible, silice, ...) et à les hybrider ensuite (par collage avec une colle optique 11, ou par contact face à face) avec la face polie du matériau laser 8 (figure 5b).

Le procédé de fabrication décrit ci-dessus offre la possibilité de produire des microlasers en grande série, donc à faible coût, ce qui est indispensable pour des applications dans des domaines tels que l'automobile.

En outre, le microlaser ainsi fabriqué possède les avantages déjà cités : il est monolithique, donc d'emploi souple, et ne nécessite ni réglage optique ni alignement, car le procédé de fabrication monolithique permet l'autoalignement du laser.

Parmi les applications industrielles possibles des microlasers, on peut notamment citer la télémétrie laser, le marquage et micro-usinage laser, l'injection laser (pour les lasers de puissance), la magnétométrie He, la détection de polluants, l'instrumentation scientifique et médicale.

En outre, l'association des microlasers et des technologies micro-optiques (microlentilles) tout en gardant l'avantage de la fabrication collective et le faible coût permet :

- d'améliorer les performances des microlasers (cavités stables, focalisation de la pompe),
- de réaliser des microsystèmes optiques destinés à des applications particulières, telles que :

  • la réalisation de réseaux 2D (éventuellement adressables)
  • le micro-lidar (télédétection de vitesse de vent, de pollution, ...),
  • la détection d'obstacle pour l'automobile,
  • la télémétrie laser,
  • les machines de marquage laser compact à faible coût.

Plusieurs de ces applications, notamment le marquage, le micro-lidar, la détection d'obstacle, la télémétrie nécessitent des puissances crêtes élevées, donc un fonctionnement déclenché. Le microlaser selon l'invention se prêtera très bien à de telles applications.

## REFERENCES CITEES DANS LA PRESENTE DESCRIPTION

1 - N. Mermilliod et al., Appl. Phys. Letters 59(27), 3519 (1991).

2 - J.J. Zayhowski The Lincoln Laboratory Journal 3(3), 427 (1990)

3 - W. Koechner "Solid State Laser Engineering", Springer-Verlag 1988.

4 - Shouhuan Zhou et al., Optics Letters 18(7), 511 (1993).

5 - I.J. Miller et al. Advanced Solid State Lasers conf., Santa Fe 1992.

6 - K. Spariosu et al., Appl. Phys. Letters 62(22), 2763 (1993).

7 - R. Wisnieff et al., Laser Cartridge Concept Development Study, Final report. Army electronics command, Fort Monmouth, NJ, report No:1294-R-0018 ; ECOM-74-0376-F, avril 1976.

8 - K.H. Drexhage et al., Optics Communications 10 (1), 19(1974).

9 - Mueller-Westerhoff, Mol. Cryst. Liq. Cryst. 183, 291(1990).

10 - A. Eda et al., CLEO'92, paper CWG33, p. 282 (Conf. on Laser and Electro-optics, Anaheim, USA, May 1992)

## Revendications

1. Cavité laser pour microlaser comportant un milieu actif solide (8), un absorbant saturable (12, 22), un miroir d'entrée (14) et un miroir de sortie (15), **caractérisée en ce que** l'absorbant saturable est une couche mince de matériau absorbant saturable directement déposée sur ledit milieu actif solide, cette couche étant constituée d'un gel de silice contenant un colorant organique, ou étant constituée d'un polymère contenant des molécules d'absorbant saturable et formé à partir d'une solution.

2. Cavité laser selon la revendication 1, **caractérisée en ce que** le milieu actif solide (8) est constitué d'un matériau de base choisi parmi $Y_3Al_5O_{12}$, $LaMgA_{11}O_{19}$, $YVO_4$, $Y_2SiO_5$, $YLiF_4$ ou $GdVO_4$ et est dopé avec des ions de néodyme (Nd), d'erbium (Er), de thulium (Tm), d'holmium (Ho), ou avec un codopage d'ions erbium et d'ytterbium (Er+Yb), ou avec un codopage de thulium et d'holmium (Tm+Ho).

3. Cavité laser selon la revendication 1 ou 2, **caractérisée en ce que** la couche mince est composée d'un colorant organique en solution dans un solvant polymère.

4. Cavité laser selon la revendication 3, **caractérisée en ce que** le colorant organique est choisi parmi le bis(4-diéthylaminodithiobenzyl)nickel ou le bis (4-diméthylaminodithiobenzyl)nickel et que le solvant est une solution de poly(méthyméthacrylate (PMMA), de poly(vinylalcool) ou de poly(vinyl acétate ou de poly(styrène).

5. Cavité laser selon l'une des revendications précédentes, **caractérisée en ce que** la cavité laser comporte une deuxième couche d'absorbant saturable (22).

6. Cavité laser selon l'une des revendications précédentes, **caractérisée en ce qu'**elle comporte un réseau de microlentilles (16) directement formé sur le matériau laser (8).

7. Cavité laser selon l'une des revendications précédentes, **caractérisée en ce que** les miroirs d'entrée (14) et de sortie (15) sont des miroirs dichroïques.

8. Microlaser comportant une cavité laser selon l'une des revendications précédentes, et des moyens optiques (20) de pompage de la cavité.

9. Microlaser selon la revendication 8, **caractérisé en ce que** les moyens de pompage consistent en au moins une diode laser (20).

10. Microlaser selon l'une des revendications 8 ou 9, **caractérisé en ce que** la cavité laser et les moyens optiques de pompage sont montés dans un même boîtier (17).

11. Microlaser selon l'une des revendications 8 ou 9, **caractérisé en ce que** la cavité laser et les moyens optiques de pompage sont montés chacun dans un boîtier différent (17-1, 17-2), les deux boîtiers étant reliés par une fibre optique (23).

12. Procédé de fabrication d'une cavité laser selon une des revendications 1 à 7, comportant :

    - une étape de conditionnement, à une épaisseur prédéterminée, du matériau constitutif du milieu actif solide,
    - une étape de formation d'une couche mince d'absorbant saturable, directement sur une des faces du matériau préparé selon l'étape précédente, cette couche étant constituée d'un gel de silice contenant un colorant organique, ou étant constituée d'un polymère contenant des molécules d'absorbant saturable et formé à partir d'une solution.

13. Procédé de fabrication selon la revendication 12, **caractérisé en ce que** la couche mince est déposée à la tournette.

14. Procédé selon une des revendications 12 ou 13, **caractérisé en ce qu'**on dépose une couche mince composée d'un colorant organique en solution dans un solvant polymère.

15. Procédé selon la revendication 14, **caractérisé en ce que** le colorant organique est choisi parmi le bis (4-diéthylaminodithiobenzyl)nickel ou le bis(4-diméthylaminodithiobenzyl)nickel et que le solvant est une solution de poly(méthyméthacrylate (PMMA), de poly(vinylalcool) ou de poly(vinyl acétate ou de poly(styrène).

16. Procédé selon l'une quelconque des revendications 12 à 15, **caractérisé en ce que** le milieu actif solide (2) est constitué d'un matériau de base choisi parmi $Y_3Al_5O_{12}$, $LaMgA_{11}O_{19}$, $YVO_4$, $Y_2SiO_5$, $YLiF_4$ ou $GdVO_4$ et est dopé avec des ions de néodyme (Nd), d'erbium (Er), de thulium (Tm), d'holmium (Ho), ou avec un codopage d'ions erbium et d'ytterbium (Er+Yb), ou avec un codopage de thulium et d'holmium (Tm+Ho).

17. Procédé selon l'une des revendications 12 à 16, **ca-**

**ractérisé en ce qu'**on dépose sur une autre face du matériau laser actif, une deuxième couche d'absorbant saturable.

18. Procédé selon l'une des revendications 12 à 17, **caractérisé en ce qu'**il comporte une étape supplémentaire de formation d'un réseau de microlentilles, directement sur le matériau laser.

19. Procédé selon la revendication 18, **caractérisé en ce que** le réseau de microlentilles est gravé directement sur le matériau actif laser.

20. Procédé selon l'une des revendications 12 à 19, comportant en outre une étape de formation d'un miroir d'entrée et d'un miroir de sortie de la cavité par dépôt de multicouches diélectriques.

**Patentansprüche**

1. Laserresonator für Mikrolaser mit einem festen aktiven Medium (8), einem sättigbaren Absorptionsmittel (12, 22) einem Eingangsspiegel (14) und einem Ausgangsspiegel (15),
   **dadurch gekennzeichnet,**
   **dass** das sättigbare Absorptionsmittel eine Dünnschicht aus sättigbarem absorbierendem Material ist, direkt auf dem genannten festen aktiven Medium abgeschieden, wobei diese Schicht durch ein Siliciumdioxid-Gel gebildet wird, das einen organischen Farbstoff enthält, oder durch ein Polymer gebildet wird, das Moleküle des sättigbaren Absorptionsmittels enthält und aus einer Lösung entstanden ist.

2. Laserresonator nach Anspruch 1, **dadurch gekennzeichnet, dass** das feste aktive Medium (8) durch ein Basismaterial gebildet wird, das ausgewählt wird unter $Y_3Al_5O_{12}$, $LaMgA_{11}O_{19}$, $YVO_4$, $Y_2SiO_5$, $YLiF_4$ oder $GdVO_4$ und dotiert wird mit Ionen von Neodym (Nd), Erbium (Er), Thulium (Tm), Holmium (Ho), oder durch eine Codotierung mit Erbium- und Ytterbium-Ionen (Er+Yb), oder durch eine Codotierung mit Thulium und Holmium (Tm+Ho).

3. Laserresonator nach Anspruch 1 oder 2, **dadurch gekennzeichnet, dass** die Dünnschicht durch einen in einem polymeren Lösungsmittel gelösten organischen Farbstoff gebildet wird.

4. Laserresonator nach Anspruch 3, **dadurch gekennzeichnet, dass** der organische Farbstoff ausgewählt wird zwischen Bis(4-diethylaminodithiobenzyl)nickel oder Bis(4-dimethylaminodithiobenzyl)nickel, und dass das Lösungsmittel eine Lösung aus Polymethylacrylat (PMMA), Polyvinylalkohol oder Polyvinylacetat oder Polystyrol ist.

5. Laserresonator nach einem der vorangehenden Ansprüche, **dadurch gekennzeichnet, dass** der Laserresonator eine zweite Schicht (22) aus sättigbarem Absorptionsmaterial umfasst.

6. Laserresonator nach einem der vorangehenden Ansprüche, **dadurch gekennzeichnet, dass** er ein Gitter aus direkt auf dem Lasermaterial (8) ausgebildeten Mikrolinsen (16) umfasst.

7. Laserresonator nach einem der vorangehenden Ansprüche, **dadurch gekennzeichnet, dass** der Eingangsspiegel (14) und der Ausgangsspiegel (15) dichroitische Spiegel sind.

8. Mikrolaser mit einem Laserresonator nach einem der vorangehenden Ansprüche und mit optischen Einrichtungen (20) zum Pumpen des Resonators.

9. Mikrolaser nach Anspruch 8, **dadurch gekennzeichnet, dass** die Pumpeinrichtungen durch wenigstens eine Laserdiode (20) gebildet werden.

10. Mikrolaser nach einem der Ansprüche 8 oder 9, **dadurch gekennzeichnet, dass** der Laserresonator und die optischen Pumpeinrichtungen in ein und dasselbe Gehäuse (17) montiert sind.

11. Mikrolaser nach einem der Ansprüche 8 oder 9, **dadurch gekennzeichnet, dass** sowohl der Laserresonator als auch die optischen Pumpeinrichtungen jeweils in ein anderes Gehäuse (17-1, 17-2) montiert sind, wobei die beiden Gehäuse durch eine optische Faser (23) verbunden sind.

12. Verfahren zur Herstellung eines Laserresonators nach einem der Ansprüche 1 bis 7, umfassend:

    - einen Schritt zur Konditionierung bzw. Aufbereitung des das feste aktive Medium bildenden Materials mit einer festgelegten Dicke,
    - einen Schritt zur Bildung einer Dünnschicht aus sättigbarem Absorptionsmaterial, direkt auf einer der Flächen des nach dem vorangehenden Schritt vorbereiteten Materials, wobei diese Schicht durch ein Siliciumdioxid-Gel gebildet wird, das einen organischen Farbstoff enthält, oder durch ein Polymer gebildet wird, das Moleküle des sättigbaren Absorptionsmaterials enthält und aus einer Lösung entstanden ist.

13. Herstellungsverfahren nach Anspruch 12, **dadurch gekennzeichnet, dass** die Dünnschicht mit der Schleuder aufgetragen wird.

14. Verfahren nach einem der Ansprüche 12 oder 13,

dadurch gekennzeichnet, dass man eine Dünnschicht aufträgt, die durch einen in einem polymeren Lösungsmittel gelösten organischen Farbstoff gebildet wird.

15. Verfahren nach Anspruch 14, **dadurch gekennzeichnet, dass** der organische Farbstoff ausgewählt wird zwischen Bis(4-diethylaminodithiobenzyl)nickel oder Bis(4-dimethylaminodithiobenzyl)nickel, und dass das Lösungsmittel eine Lösung aus Polymethylacrylat (PMMA), Polyvinylalkohol oder Polyvinylacetat oder Polystyrol ist.

16. Verfahren nach einem der Ansprüche 12 bis 15, **dadurch gekennzeichnet, dass** das feste aktive Medium (2) durch ein Basismaterial gebildet wird, das ausgewählt wird unter $Y_3Al_5O_{12}$, $LaMgA_{11}O_{19}$, $YVO_4$, $Y_2SiO_5$, $YLiF_4$ oder $GdVO_4$ und dotiert wird mit Ionen von Neodym (Nd), Erbium (Er), Thulium (Tm), Holmium (Ho), oder durch eine Codotierung mit Erbium- und Ytterbium-Ionen (Er+Yb), oder durch eine Codotierung mit Thulium und Holmium (Tm+Ho).

17. Verfahren nach einem der Ansprüche 12 bis 17, **dadurch gekennzeichnet, dass** man auf einer anderen Fläche des aktiven Lasermaterials eine zweite Schicht aus sättigbarem Absorptionsmaterial aufbringt.

18. Verfahren nach einem der Ansprüche 12 bis 17, **dadurch gekennzeichnet, dass** es einen zusätzlichen Schritt zur Bildung eines Mikrolinsengitters direkt auf dem Lasermaterial umfasst.

19. Verfahren nach Anspruch 18, **dadurch gekennzeichnet, dass** das Mikrolinsengitter direkt in das aktive Lasermaterial geätzt wird.

20. Verfahren nach einem der Ansprüche 12 bis 19, **dadurch gekennzeichnet, dass** es außerdem einen Schritt zur Bildung eines Eingangsspiegels des Resonators durch Abscheiden dielektrischer Mehrfachschichten umfasst.

**Claims**

1. Laser cavity for a microlaser having a solid, active medium (8), a saturable absorber (12, 22), an entrance mirror (14) and an exit mirror (15), **characterized in that** the saturable absorber is a thin saturable absorber material film directly deposited on said solid, active medium, said film being constituted by a silica gel containing an organic dye, or being constituted by a polymer containing saturable absorber molecules and formed from a solution.

2. Laser cavity according to claim 1, **characterized in that** the solid, active medium (8) is constituted by a base material chosen from among $Y_3Al_5O_{12}$, $LaMgA_{11}O_{19}$, $YVO_4$, $Y_2SiO_5$, $YLiF_4$ or $GdVO_4$, doped with ions of neodymium (Nd), erbium (Er), thulium (Tm), holmium (Ho), or with a codoping of erbium and ytterbium (Er+Yb) ions or a codoping of thulium and holmium (Tm+Ho).

3. Laser cavity according to claim 1 or 2, **characterized in that** the thin film is formed from an organic dye dissolved in a polymer solvent.

4. Laser cavity according to claim 3, **characterized in that** the organic dye is chosen from among bis(4-diethylaminodithobenzyl)-nickel or bis(4-dimethylaminodithiobenzyl)-nickel and the solvent is a solution of polymethyl methacrylate (PMMA), polyvinyl alcohol, polyvinyl acetate or polystyrene.

5. Laser cavity according to one of the preceding claims, **characterized in that** the laser cavity comprises a second, saturable absorber film (22).

6. Laser cavity according to one of the preceding claims, **characterized in that** it comprises a microlens array (16) directly formed on the laser material (8).

7. Laser cavity according to one of the preceding claims, **characterized in that** the entrance mirror (14) and exit mirror (15) are dichroic mirrors.

8. Microlaser incorporating a laser cavity according to one of the preceding claims and optical cavity pumping means (20).

9. Microlaser according to claim 8, **characterized in that** the pumping means are constituted by at least one laser diode (20).

10. Microlaser according to one of the claims 8 or 9, **characterized in that** the laser cavity and the optical pumping means are installed in the same case (17) .

11. Microlaser according to one of the claims 8 or 9, **characterized in that** the laser cavity and the optical pumping means are installed in a different case (17-1, 17-2), the two cases being linked by an optical fibre (23).

12. Process for the production of a laser cavity according to one of the claims 1 to 7, comprising:

   - a conditioning stage, at a predetermined thickness, of the material forming the solid, active medium,

- a stage of forming a saturable absorber film directly on one of the faces of the material prepared according to the preceding stage, said film being constituted by a silica gel containing an organic dye, or being constituted by a polymer containing saturable absorber molecules and formed from a solution.

13. Production process according to claim 12, **characterized in that** the thin film is deposited with the whirler.

14. Process according to either of the claims 12 and 13, **characterized in that** the thin film is formed from an organic dye dissolved in a polymer solvent.

15. Process according to claim 14, **characterized in that** the organic dye is chosen from among bis(4-diethylaminodithiobenzyl)-nickel or bis(4-dimethylaminodithiobenzyl)-nickel and the solvent being a solution of polymethyl methacrylate (PMMA), polyvinyl alcohol, polyvinyl acetate or polystyrene.

16. Process according to any one of the claims 12 to 15, **characterized in that** the solid, active medium (2) is constituted by a base material chosen from among $Y3A15012$, $LaMgA_{11}O_{19}$, $YVO_4$, $Y_2SiO_5$, $YLiF_4$ or $GdVO_4$, doped with ions of neodymium (Nd), erbium (Er), thulium (Tm), holmium (Ho), or with a codoping of erbium and ytterbium (Er+Yb) ions, or with a codoping of thulium and holmium (Tm+Ho).

17. Process according to any one of the claims 12 to 16, **characterized in that** a second saturable absorber film is deposited on another face of the active laser material.

18. Process according to any one of the claims 12 to 17, **characterized in that** it comprises a supplementary stage of forming a microlens array directly on the laser material.

19. Process according to claim 18, **characterized in that** the microlens array is etched directly on the active laser material.

20. Process according to any one of the claims 12 to 19, comprising a stage of forming an entrance mirror and an exit mirror of the cavity by the deposition of dielectric multilayers.

FIG. 1a

FIG. 1b

FIG. 1c

FIG. 1d

FIG. 1e

FIG. 2a

FIG. 2b

FIG. 4a

FIG. 4b

FIG. 5a

FIG. 5b

FIG. 3a

FIG. 3b

FIG. 6a

FIG. 6b

FIG. 7

FIG. 8